# EUROPÄISCHE PATENTSCHRIFT

(11) **EP 0 620 075 B1**
(45) Veröffentlichungstag und Bekanntmachung des Hinweises auf die Patenterteilung: **27.12.1996**
(21) Anmeldenummer: 94104464.6
(22) Anmeldetag: 22.03.1994
(51) Int. Cl.: B23K 9/29, B23K 9/28

(54) **Lichtbogenschweissbrenner zum Schutzgasschweissen**
Arc welding torch for welding under protective gas
Torche de soudage à l'arc pour le soudage sous gaz protecteur

(30) Priorität: 14.04.1993 DE 4312167
(43) Veröffentlichungstag der Anmeldung: 19.10.1994
(73) Patentinhaber: Dinse GmbH, D-22041 Hamburg (DE)
(72) Erfinder: Willmann, Edwin, D-24558 Henstedt-Ulzburg (DE); Klöter, Walter, D-22848 Norderstedt (DE); Murr, Hermann, Dipl.-Ing., D-18146 Rostock (DE)
(74) Vertreter: von Raffay, Vincenz, Dipl.-Ing.

(56) Entgegenhaltungen:
- WO-A-92/16763
- DE-A- 2 631 742

## Beschreibung

Die Erfindung betrifft einen Lichtbogenschweißbrenner nach dem Oberbegriff des Anspruches 1.

Ein Lichtbogenschweißbrenner der vorstehend genannten Art ist aus der DE-A-26 31 742 bekannt.

Bei derartigen Lichtbogenschweißbrennern besteht seit langem das Bestreben, die im Bereich der Kontaktspitze erzeugte Wärme möglichst schnell abzuleiten und zwar in den Bereich des Schweißbrenners, in dem das Kühlmittel strömt. Dieses wird im Falle des Lichtbogenschweißbrenners nach der DE-A-26 31 742 dadurch angestrebt, daß die Kontaktspitze mit Hilfe eines Gewindes auf den den Kühlmittelkreislauf enthaltenden Abschnitt der Aufnahme außen aufgeschraubt ist, so daß Berührungsflächen vorhanden sind, die die Wärme von der Kontaktspitze radial nach innen in Richtung auf das Kühlmittel ableiten.

Die Bauteile des Schweißbrenners, nämlich die Kontaktspitze, ein gegebenenfalls vorhandener Einsatz in der Kontaktspitze und die Gasdüse, sind lösbar mit ihren entsprechenden Aufnahmeteilen verbunden.

Der Erfindung liegt nun die Aufgabe zugrunde, einen Lichtbogenschweißbrenner der eingangs genannten Art zu schaffen, bei dem die Befestigung der genannten Bauteile, nämlich der Kontaktspitze, sowie eines ggf. vorhandenen Einsatzes und einer Gasdüse, so ausgebildet ist, daß für eine gute Wärmeleitung und dennoch für eine einfache und schnelle Befestigung und ein entsprechendes Lösen gesorgt wird, wenn dieses erwünscht ist.

Diese Aufgabe wird grundsätzlich durch das Kennzeichen des Anspruches 1 gelöst, wobei die Ansprüche 2, 3, 4 und 5 auf besondere Ausgestaltungen gerichtet sind.

Der erfindungsgemäße Drehkonus kann also in unterschiedlicher Weise zum Einsatz kommen.

Bei welchen Bauteilen der Drehkonus auch immer vorgesehen ist, stellt er eine sehr vorteilhafte Maßnahme dar, um einerseits für eine schnelle Befestigung und ggf. Lösung, und andererseits für eine gute Wärmeleitung zu sorgen, da eine großflächige Berührung vorliegt. Es findet zwischen den Segmentflächen keine Linienberührung, sondern eine Flächenberührung statt, so daß für eine entsprechend gute Wärmeleitung gesorgt ist.

Je nachdem, wie der Schweißbrenner ausgebildet ist, kann ein Drehkonus zwischen einem oder mehreren der genannten Bauteile vorgesehen sein. Es ist auch möglich, einen Drehkonus zur Befestigung eines der genannten Bauteile einzusetzen, und die anderen Bauteile auf herkömmliche Weise durch ein Gewinde oder einen Steckkonus zu befestigten.

In vorteilhafter Weise findet der Drehkonus aber für sämtliche vorhandenen Bauteile Verwendung, für die unter Berücksichtigung der erwünschten Wärmeleitung und lösbaren Befestigung eine solche Befestigungsart von Vorteil ist.

In vorteilhafter Weise können, wie in Anspruch 8 angegeben, Längsschlitze im Bereich der Berührungsflächen vorgesehen sein, die der Leitung von Schutzgas dienen. Diese Längsschlitze können gesondert eingebracht sein, oder einfach diejenigen freigebliebenen Räume sein, die beim Drehen in Schließrichtung entstehen.

Grundsätzlich ist das Prinzip des Drehkonus, gebildet durch die spiralförmigen Segmentflächen, im Bereich der hier angesprochenen Schweißtechnik nicht nur direkt im Schweißbrenner, d.h. im Schweißwerkzeug, einsetzbar, sondern auch bei Schnellkupplungen zur Übertragung von Strom und/oder Wärme in der Zuleitung zwischen Schweißstromquelle und Schweißbrenner, wobei die Trennstelle an der Schweißmaschine, im Schlauchpaket oder im Schweißpistolenkopf selbst vorgesehen sein kann.

Im folgenden wird die Erfindung unter Hinweis auf die Zeichnung anhand verschiedener Ausführungsbeispiele näher erläutert.

Es zeigt:
- Fig. 1: einen Längsschnitt durch eine erste Ausführungsform eines Schweißbrenners nach der Erfindung;
- Fig. 2: einen Querschnitt gemäß der Linie C-C der Fig. 1, und zwar nach dem Aufschieben der Kontaktspitze, aber vor dem Verdrehen;
- Fig. 3: einen der Fig. 2 entsprechenden Querschnitt, jedoch nach dem Verdrehen;
- Fig. 4: einen Längsschnitt durch eine andere Ausführungsform;
- Fig. 5: einen Längsschnitt durch eine weitere Ausführungsform;
- Fig. 6: einen Querschnitt im extrem vergrößerten Maßstab gemäß der Linie A-A der Fig. 5 nach dem Einschieben des Einsatzes;
- Fig. 7: einen der Fig. 6 entsprechenden Querschnitt, jedoch nach dem Verdrehen des Einsatzes;
- Fig. 8: einen Längsschnitt durch eine weitere Ausführungsform eines Schweißbrenners nach der Erfindung mit einer Gasdüse;
- Fig. 9: einen Querschnitt gemäß der Linie B-B der Fig. 8 im vergrößerten Maßstab nach dem Aufschieben der Gasdüse;
- Fig.10: einen der Fig. 9 entsprechenden Querschnitt, jedoch nach dem Verdrehen der Gasdüse,
- Fig. 11: eine Vorderansicht einer weiteren Ausführungsform; und
- Fig. 12: einen Längsschnitt durch die Ausführungsform entsprechend Fig. 11 mit innenliegender Kontaktspitze.

Gleiche Teile der verschiedenen Ausführungen sind mit gleichen Bezugszeichen bezeichnet.

Von dem in der Zeichnung dargestellten Schweißbrenner sind nur die wesentlichen Bauteile dargestellt. Der Schweißbrenner weist eine Kontaktspitze 1 auf, die auf einer Aufnahme 2 befestigt ist. Das Kühlmittel strömt durch ein Rohr 3 und ein Rohr 4 zu einem Kühlmittelringkanal 5 in der Aufnahme 2 und wieder zurück.

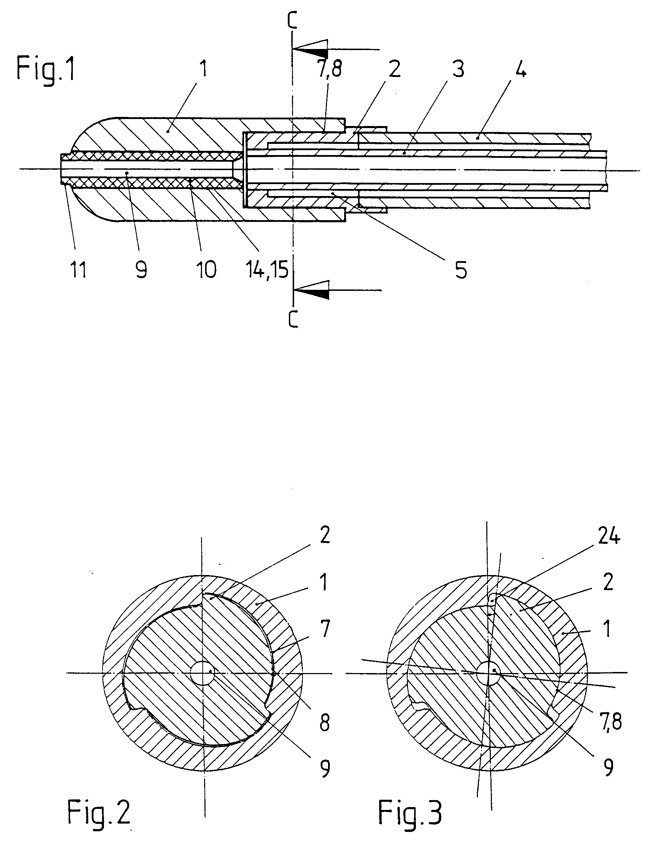

Bei der Ausführungsform nach den Fig. 1 bis 3 ist die Kontaktspitze an der Aufnahme 2 mit Hilfe eines Drehkonus befestigt, der durch spiralförmige Berührungsflächen 7,8 gebildet wird, wie es am besten beim Betrachten der Fig. 2 und 3 deutlich wird. Diese Berührungsflächen 7 und 8 weisen als gemeinsamen Mittelpunkt die im Querschnitt erkennbare Mittellinie der Schweißdrahtbohrung 9 auf. In Längsrichtung sind die Segmentflächen 7 und 8 von der Mittellinie der Schweißdrahtbohrung 9 immer gleich beabstandet, d.h. sie bilden praktisch Zylinderflächen. Im Querschnitt sind sie so spiralförmig ausgebildet, wie es beim Betrachten der Fig. 2 und 3 deutlich wird. In der Stellung nach Fig. 2 kann die Kontaktspitze 1 auf die Aufnahme 2 ungehindert aufgesteckt werden. Zur Befestigung erfolgt dann ein Verdrehen um einen kleinen Winkel, der in Fig. 3 dargestellt ist. Hierdurch gelangen die Segmentflächen 7 und 8 miteinander in Anlage, d.h. sie "verkeilen". Es entsteht eine großflächige Berührung, die für eine gute Wärmeleitung und für eine sichere Befestigung sorgt, die gleichzeitig wieder gelöst werden kann.

Die Kontaktspitze umgibt mit ihrem dem Rohr 3,4 zugekehrten Ende den Kühlmittelringkanal 5, wobei die Drehkonusverbindung in diesem Bereich für einen guten Wärmeübergang und für eine sichere Befestigung sorgt.

Wenn es erwünscht ist, kann, wie in Fig. 1 dargestellt, ein Einsatz 10 in einer Innenbohrung der Kontaktspitze befestigt werden. Dieser Einsatz stellt ein Verschleißteil dar, das ausgewechselt werden kann. Der Einsatz kann also speziell auf seine Aufgabe, ein Verschleißteil zu sein, gestaltet sein, d.h. aus entsprechenden Materialien bestehen.

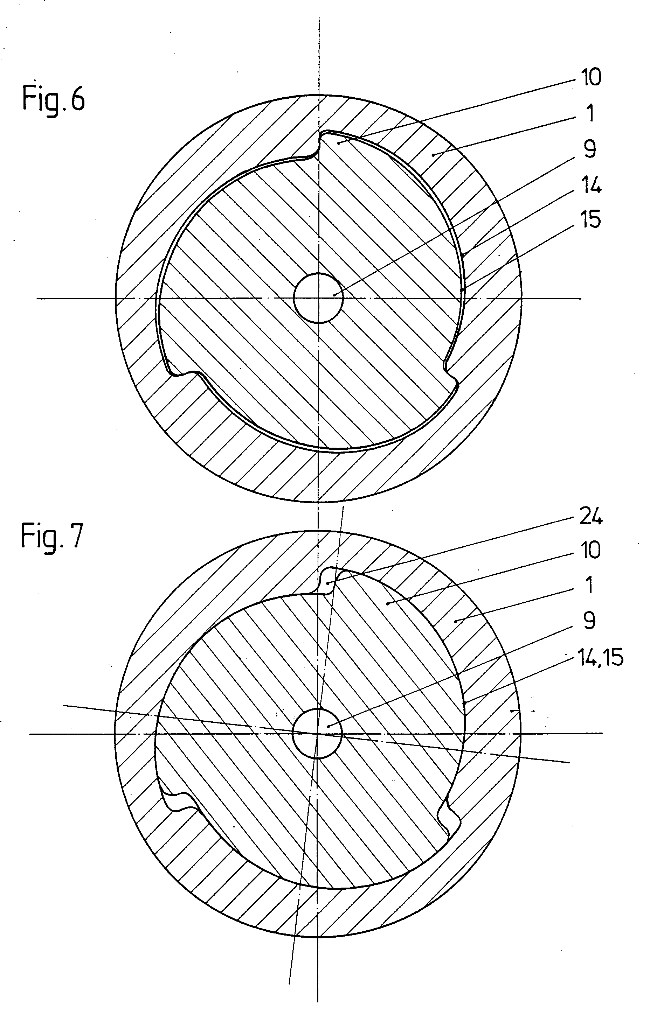

In vorteilhafter Weise ist der Einsatz nach dem gleichen Prinzip befestigt wie die Kontaktspitze, nämlich mit Hilfe eines Drehkonus, der so ausgestaltet ist, wie in den Fig. 6 und 7 dargestellt. Die spiralförmigen Segmentflächen sind mit 14 und 15 bezeichnet. Um die Verbindung nach dem Einstecken des Einsatzes 10 zu erzielen, ist ein Angriff 11 für ein Werkzeug vorgesehen. Hierdurch kann die feste Verbindung durch geringes Verdrehen erzielt werden, d.h. um die in Fig. 7 gezeigte Stellung einzunehmen. In umgekehrter Weise ist diese Verbindung wieder lösbar, wenn der Einsatz ausgewechselt werden soll.

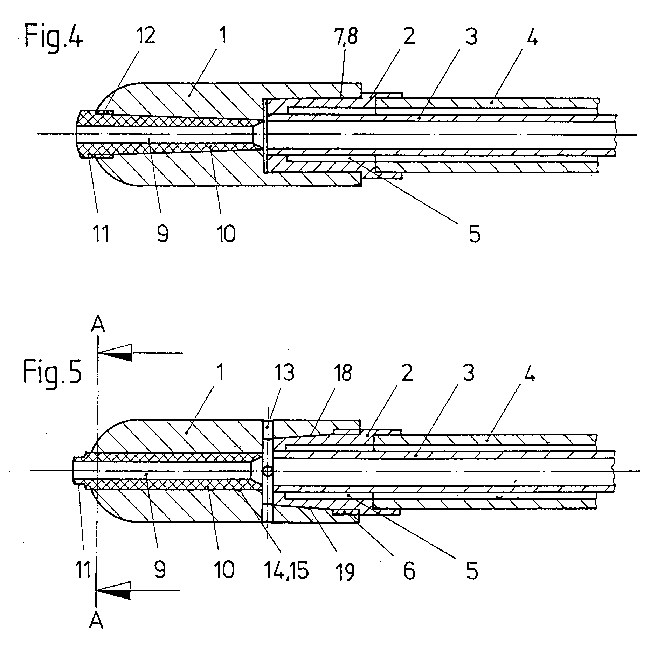

Die Ausführungsform nach Fig. 4 zeigt eine Kontaktspitze 1, die ebenfalls mit Hilfe eines Drehkonus (Segmentflächen 7,8) an der Aufnahme 2 befestigt ist. Der Einsatz 10 ist anders als bei der Ausführungsform nach Fig. 1 befestigt, nämlich mit Hilfe eines Steckkonus und eines Gewindes 12 im vorderen Bereich.

Bei der Ausführungsform nach Fig. 5 ist der Einsatz mit Hilfe eines Drehkonus (Segmentflächen 14,15) befestigt. Die Befestigung der Kontaktspitze 1 an der Aufnahme 2 erfolgt bei dieser Ausführungsform mit Hilfe einer Steckkonusverbindung 18,19 und eines Gewindes 6. Weiterhin ist bei dieser Ausführungsform eine Querbohrung 13 für den Durchtritt von Schutzgas vorgesehen.

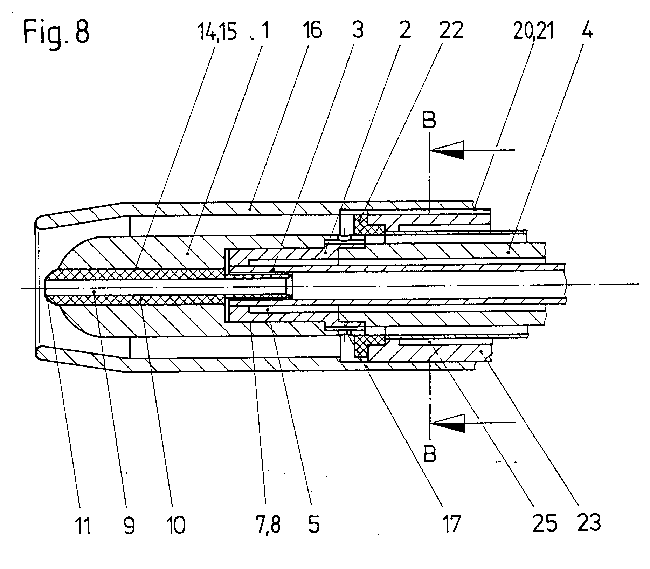

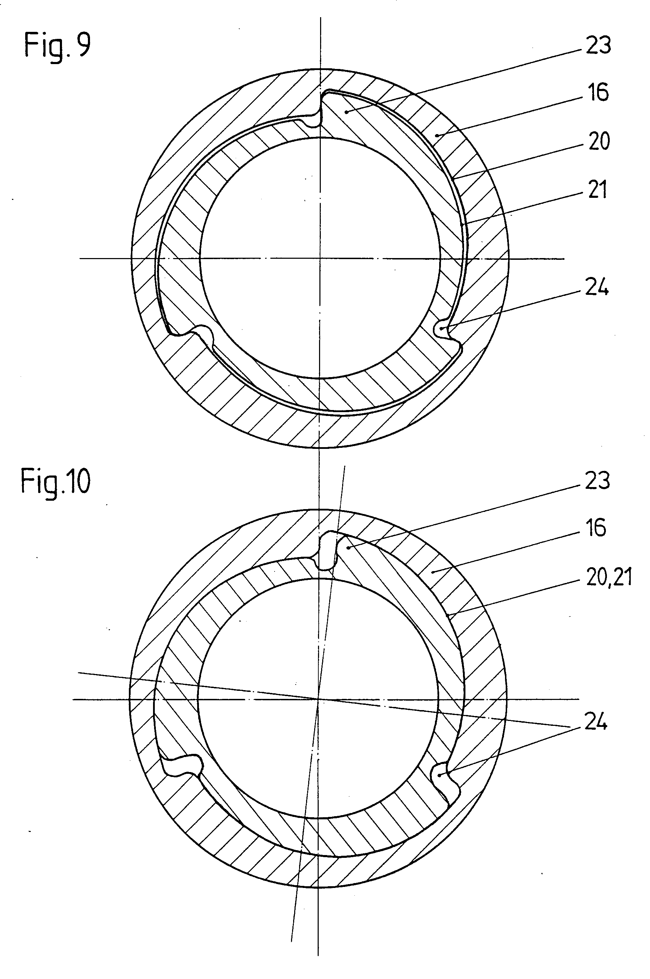

Die Ausführungsform nach Fig. 8 entspricht grundsätzlich derjenigen nach Fig. 1, wobei aber eine Gasdüse 16 an einer rohrförmigen Gasdüsenaufnahme 23 befestigt ist, und zwar wiederum mit Hilfe eines Drehkonus, der dem vorstehend beschriebenen entspricht und in den Fig. 9 und 10 dargestellt ist. Die Segmentflächen sind mit 20 und 21 bezeichnet.

Bei dieser Ausführungsform ist die Gasdüse 16 durch einen Isolierring 22 von den Rohren 3 und 4 elektrisch isoliert. Die Schutzgasleitung erfolgt durch einen Ringkanal außen an dem Rohr 4 zu Öffnungen 17 und von dort in den Bereich der Gasdüse 16, d.h. in den Ringraum zwischen Gasdüse 16 und Kontaktspitze 1. Bei dieser Ausführungsform ist ein zweiter Kühlkreislauf 25 vorgesehen, der der Kühlung der Gasdüsenaufnahme 23 dient.

Wie beim Betrachten der entsprechenden Querschnitte nach den Fig. 2,3 oder den Fig. 6,7 oder den Fig. 9,10 deutlich wird, können im Bereich der Segmentflächen 7,8; 14,15; 20,21 Längsschlitze 24 vorgesehen sein, die der Leitung von Schutzgas dienen. Diese Längsschlitze können, wie bei den Ausführungsformen nach den Fig. 2 und 3 bzw. 6 und 7, lediglich durch Verdrehen der entsprechenden Bauteile entstehen, oder aber sie sind besonders hergestellt, wie bei den Fig. 9 und 10.
Am Beispiel der Fig. 6 und 7 wird das Wirkungsprinzip der Drehkonusverbindung näher erläutert.

Das Innenteil (Einsatz 10) ist in seiner Außenkontur (Segmentfläche 15) mit drei spiralförmigen Segmenten von jeweils 120° ausgebildet. Dabei wächst die Entfernung der Mantellinie jedes Segmentes von einem gemeinsamen Mittelpunkt je Winkelschritt um einen bestimmten Wert gegenüber dem Radius an. Bei einem linearen Zuwachs würde als Abwicklung also eine schiefe Ebene entstehen, die Steigung liegt bei den genannten Ausführungsformen bei ca. 5 %.

Die Innenkontur (Segmentfläche 14) des Außenteils (Kontaktspitze 1) ist in gleicher Weise ausgebildet, jedoch mit einem um einen bestimmten Spalt vergrößerten Ausgangswert. Die Größe des Spaltes ist so gewählt, daß unter Berücksichtigung der Fertigungstoleranzen ein leichtes Einführen des Innenteils in das Außenteil möglich ist. Sowohl Innen- und Außenteil sind dabei mit in ihrer Längenausdehnung gleichbleibendem, zylindrischen Querschnitt ausgebildet.

Nach Verdrehung des Innen- oder Außenteils in Richtung wachsender Steigung um den Wert des Quotienten aus Spaltgrösse und Steigung ergibt sich eine formschlüssige, selbsthemmende Verbindung auf der gesamten Mantelfläche der Segmentflächen 14,15, jeweils reduziert um den Verdrehweg. Dieser Zustand ist in Fig. 7 dargestellt. Die Verbindung kann durch Verdrehen in entgegengesetzter Richtung wieder gelöst werden.

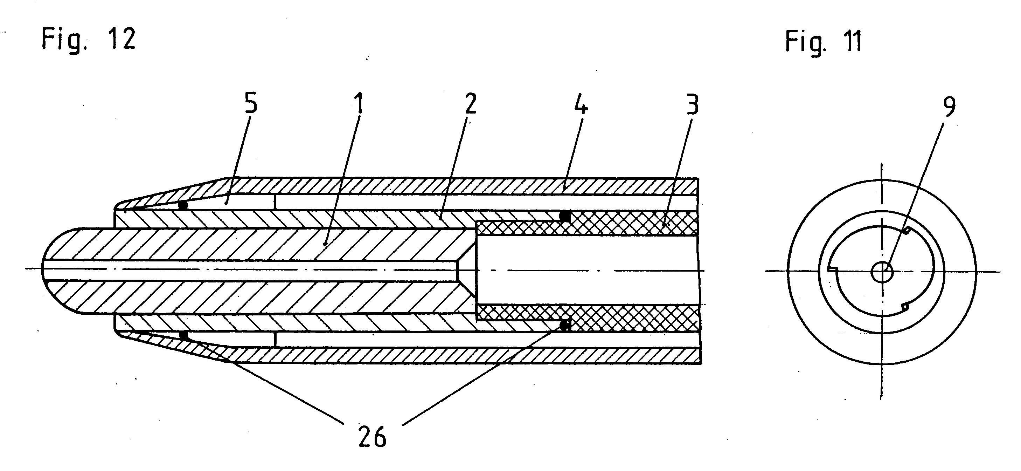

Die in den Fig. 11 und 12 dargestellte Ausführungsform unterscheidet sich dadurch von den in den anderen Figuren veranschaulichten Ausführungsformen, daß die Aufnahme 2 mit dem Kühlmittelringkanal 5 die Kontaktspitze außen umgibt, so daß die Berührungsflächen, die als Drehkonus mit den spiralförmigen Segmentflächen ausgebildet sind, sich innen an der Aufnahme und außen an der Kontaktspitze befinden. Die Aufnahme 2 besteht aus Rohren 3,4, die durch Lötringe 26 zusammengebaut sind. Bei dieser Ausführungsform ist die Kontaktspitze über den größten Teil ihrer Längserstreckung von dem Kühlmittelringkanal 5 umgeben, so daß für eine sehr gute Wärmeableitung über den Drehkonus und eine kurze Wärmedurchgangsfläche in radialer Richtung gesorgt ist.

## Patentansprüche

1. Lichtbogenschweißbrenner zum Schutzgasschweissen mit einer Kontaktspitze (1), die an einer das Ende eines Kühlrohrkörpers (3,4) bildenden Aufnahme (2) mit Kühlmittelringkanal (5) zur Ableitung der Schweißwärme befestigt ist, dadurch gekennzeichnet, daß die Berührungsflächen zwischen der Kontaktspitze (1) und der Aufnahme (2) zur Bildung eines Drehkonus als spiralförmige Segmentflächen (7,8) ausgebildet sind.

2. Lichtbogenschweißbrenner nach Anspruch 1, bei dem die Kontaktspitze (1) in ihrem der Aufnahme zugekehrten Ende eine Befestigungsbohrung aufweist, deren Seitenwände den den Kühlmittelringkanal (5) enthaltenden Abschnitt der Aufnahme außen umgeben, dadurch gekennzeichnet, daß die Berührungsflächen zwischen der Befestigungsbohrung und dem den Kühlmittelringkanal (5) enthaltenden Abschnitt der Aufnahme (2) zur Bildung des Drehkonus als spiralförmige Segmentflächen (7,8) ausgebildet sind (Fig. 2 und 3).

3. Lichtbogenschweißbrenner nach Anspruch 1, bei dem die Kontaktspitze (1) in ihrem der Aufnahme zugekehrten Ende eine Befestigungsbohrung aufweist, deren Seitenwände den den Kühlmittelringkanal (5) enthaltenden Abschnitt der Aufnahme außen umgeben, wobei in der Kontaktspitze ein auswechselbarer, rohrförmiger Einsatz (10) zur Führung des Schweißdrahtes in einer Innenbohrung der Kontaktspitze befestigt ist, dadurch gekennzeichnet, daß die Berührungsflächen zwischen dem Einsatz (10) und der Innenbohrung der Kontaktspitze (1) zur Bildung des Drehkonus als spiralförmige Segmentflächen (14,15) ausgebildet sind (Fig. 6 und 7).

4. Lichtbogenschweißbrenner nach Anspruch 1, bei dem die Kontaktspitze (1) in ihrem der Aufnahme zugekehrten Ende eine Befestigungsbohrung aufweist, deren Seitenwände den den Kühlmittelringkanal (5) enthaltenden Abschnitt der Aufnahme außen umgeben, wobei die Kontaktspitze von einer Gasdüse umgeben ist, die an einer Gasdüsenaufnahme befestigt ist, dadurch gekennzeichnet, daß die Berührungsflächen zwischen der Gasdüsenaufnahme (23) und der Innenbohrung der Gasdüse (16) zur Bildung des Drehkonus als spiralförmige Segmentflächen (20,21) ausgebildet sind (Fig. 9 und 10).

5. Lichtbogenschweißbrenner nach Anspruch 1, bei dem die Aufnahme (2) in ihrem der Kontaktspitze zugekehrten Ende eine Befestigungsbohrung aufweist, deren Seitenwände die Kontaktspitze außen umgeben, dadurch gekennzeichnet, daß die Berührungsflächen zwischen der Befestigungsbohrung in der Aufnahme (2) und der Kontaktspitze (1) zur Bildung des Drehkonus als spiralförmige Segmentflächen (7,8) ausgebildet sind (Fig. 11 und 12).

6. Lichtbogenschweißbrenner nach einem der vorstehenden Ansprüche, gekennzeichnet durch die Kombination mit dem Lichtbogenschweißbrenner nach einem oder zweien der anderen vorstehenden Ansprüche.

7. Lichtbogenschweißbrenner nach einem oder mehreren der vorstehenden Ansprüche, dadurch gekennzeichnet, daß zwischen den spiralförmigen Segmentflächen (7,8; 14,15; 20,21) Längsschlitze (24) zur Durchführung von Schutzgas ausgebildet sind.

8. Lichtbogenschweißbrenner nach Anspruch 3, dadurch gekennzeichnet, daß der Einsatz an seiner in Gebrauchslage dem Werkstück zugekehrten Seite einen Angriff (11) für ein Werkzeug aufweist.

## Claims

1. Arc welding torch for shielded arc welding having a contact point (1), which is fixed to a receptacle (2) forming the end of a cooling tube body (3, 4) with a coolant ring channel (15) for dissipating the welding heat, characterized in that the contact surfaces between the contact point (1) and the receptacle (2) are constructed as spiral segmental surfaces (7, 8) for forming a turning taper.

2. Arc welding torch according to claim 1, in which the contact point (1) has at its end facing the receptacle a fixing hole, whose side walls externally surround the portion of the receptacle containing the coolant ring channel (5), characterized in that the contact surfaces between the fixing hole and the portion of the receptacle (2) containing the coolant ring channel (5) are constructed as spiral segmental surfaces (7, 8) for forming the turning taper (figs. 2 and 3).

3. Arc welding torch according to claim 1, in which the contact point (1) has in its end facing the receptacle a fixing hole, whose side walls externally surround the portion of the receptacle containing the coolant ring channel (5), an interchangeable, tubular insert (10) for guiding the welding wire in an inner hole of the contact point being fixed in the latter, characterized in that the contact surfaces between the insert (10) and the inner hole of the contact point (1) are constructed as spiral segmental surfaces (14, 15) for forming the turning taper (figs. 6 and 7).

4. Arc welding torch according to claim 1, in which the contact point (1) has in its end facing the receptacle a fixing hole, whose side walls externally surround the portion of the receptacle containing the coolant ring channel (5), the contact point being surrounded by a gas nozzle, which is fixed to a gas nozzle receptacle, characterized in that the contact surfaces between the gas nozzle receptacle (23) and the inner hole of the gas nozzle (16) are constructed as spiral segmental surfaces (20, 21) for forming the turning taper (figs. 9 and 10).

5. Arc welding torch according to claim 1, in which the receptacle (2) in its end facing the contact point has a fixing hole, whose side walls externally surround the contact point, characterized in that the contact surfaces between the fixing hole in the receptacle (2) and contact point (1) are constructed as spiral segmental surfaces (7, 8) for forming the turning taper (figs. 11 and 12).

6. Welding arc torch according to one of the preceding claims, characterized by the combination with a welding arc torch according to one or two of the other preceding claims.

7. Welding arc torch according to one or more of the preceding claims, characterized in that longitudinal slots (24) for the passage of inert gas are formed between the spiral segmental surfaces (7,8; 14, 15; 20, 21).

8. Welding arc torch according to claim 3, characterized in that on its side facing the workpiece in the use position the insert has an application point (11) for a tool.

## Revendications

1. Chalumeau pour soudage à l'arc pour soudage à l'arc sous pression gazeuse avec une pointe de contact (1) qui est fixée sur un logement (2) qui forme l'extrémité d'un corps de tuyau de refroidissement (3, 4) avec un canal annulaire pour l'agent de refroidissement (5) pour faire évacuer la chaleur de soudage, caractérisé en ce que les surfaces de contact entre la pointe de contact (1) et le logement (2) sont configurées comme des surfaces de segment en forme de spirale (7, 8) pour former un cône rotatif.

2. Chalumeau pour soudage à l'arc selon la revendication 1 pour lequel la pointe de contact (1) présente, dans son extrémité tournée vers le logement, une forure de fixation dont les parois latérales entourent à l'extérieur la section du logement qui contient le canal annulaire pour l'agent de refroidissement (5), caractérisé en ce que les surfaces de contact entre la forure de fixation et la section du logement (2) qui contient le canal annulaire pour l'agent de refroidissement (5) sont configurées comme des surfaces de segment en forme de spirale (7, 8) pour former le cône rotatif (figures 2 et 3).

3. Chalumeau pour soudage à l'arc selon la revendication 1 pour lequel la pointe de contact (1) présente, dans son extrémité tournée vers le logement, une forure de fixation dont les parois latérales entourent à l'extérieur la section du logement qui contient le canal annulaire pour l'agent de refroidissement (5), un insert (10) interchangeable en forme de tuyau étant fixé dans la pointe de contact pour guider la baguette de soudage dans une forure intérieure de la pointe de contact, caractérisé en ce que les surfaces de contact entre l'insert (10) et la forure intérieure de la pointe de contact (1) sont configurées comme des surfaces de segment en forme de spirale (14, 15) pour former le cône rotatif (fig. 6 et 7).

4. Chalumeau pour soudage à l'arc selon la revendication 1 pour lequel la pointe de contact (1) présente, dans son extrémité tournée vers le logement, une forure de fixation dont les parois latérales entourent à l'extérieur la section du logement qui contient le canal annulaire pour l'agent de refroidissement (5), la pointe de contact étant entourée par une tuyère à gaz qui est fixée sur un logement pour tuyère à gaz, caractérisé en ce que les surfaces de contact entre le logement de la tuyère à gaz (23) et la forure intérieure de la tuyère à gaz (16) sont configurées comme des surfaces de segment en forme de spirale (20, 21) pour former le cône rotatif (fig. 9 et 10).

5. Chalumeau pour soudage à l'arc selon la revendication 1 pour lequel la pointe de contact (1) présente, dans son extrémité tournée vers le logement, une forure de fixation dont les parois latérales entourent a l'extérieur la pointe de contact, caractérisé en ce que les surfaces de contact entre la forure de fixation dans le logement (2) et la pointe de contact (1) sont configurées comme des surfaces de segment en forme de spirale (7, 8) pour former le cône rotatif (fig. 11 et 12).

6. Chalumeau pour soudage à l'arc selon l'une des revendications précédentes, caractérisé par la combinaison avec le chalumeau pour soudage à l'arc selon une ou deux des autres revendications précédentes.

7. Chalumeau pour soudage à l'arc selon l'une ou plusieurs des revendications précédentes, caractérisé en ce que des fentes longitudinales (24) sont configurées entre les surfaces de segment en forme de spirale (7, 8 ; 14, 15 ; 20, 21) pour le passage du gaz protecteur.

8. Chalumeau pour soudage à l'arc selon la revendication 3, caractérisé en ce que l'insert présente, sur son côté tourné vers la pièce à travailler en position d'utilisation, une entaille (11) pour un outil.
